# NEUE EUROPÄISCHE PATENTSCHRIFT

(11) **EP 0 520 306 B2**
(45) Veröffentlichungstag und Bekanntmachung des Hinweises auf die Entscheidung über den Einspruch: **02.11.2005**
(45) Hinweis auf die Patenterteilung: 03.12.1997
(21) Anmeldenummer: 92110186.1
(22) Anmeldetag: 17.06.1992
(51) Int. Cl.: G01F 1/06, G01F 15/14, G01F 15/12

(54) **Mehrstrahl-Wasserzähler**
Multijet water meter
Compteur d'eau à jets multiples

(30) Priorität: 26.06.1991 DE 4121056
(43) Veröffentlichungstag der Anmeldung: 30.12.1992
(73) Patentinhaber: SPANNER-POLLUX GmbH, D-67063 Ludwigshafen (DE)
(72) Erfinder: Lang, Gerhard, W-6701 Birkenheide (DE)
(74) Vertreter: Patentanwälte Möll und Bitterich

(56) Entgegenhaltungen:
- EP-A- 0 045 588
- EP-A- 0 204 165
- EP-A- 0 388 736
- DE-A- 116 929
- DE-A- 2 337 465
- DE-A- 2 363 909
- DE-A- 2 365 026
- DE-A- 2 937 013
- DE-A- 3 247 376
- DE-A- 3 814 791
- DE-A- 3 909 722
- DE-A0- 204 165
- DE-C2- 2 715 964
- FR-A- 2 646 271
- Japanisches Gebrauchsmuster, Veröffentlichungsnummer 63-12715, veröffentlicht am 27.01.88

## Beschreibung

Die Erfindung betrifft Mehrstrahl-Wasserzähler gemäß Anspruch 1.

Wasserzähler mit Meßeinsätzen, die unabhängig vom metallischen Zählergehäuse justiert werden können und die beim Einbau in beliebige Gehäuse ihre korrekte Justierung beibehalten sollen, sind beispielsweise bekannt aus DE-A-22 05 154, DE-A-29 23 628, DE-A-23 37 465, DE-A-23 38 327, DE-B-12 40 677, DE-B-23 39 897, DE-B-11 60 200, DE-B-10 19 835 oder DE-U-73 11 732.

Ein weiterer Meßeinsatz für Wasserzähler, der in beliebige Gehäuse eingesetzt werden kann und in allen diesen Gehäusen den Wasserdurchfluß richtig anzeigt, ist bekannt aus der DE-C-23 63 909.

Gemäß der derzeitigen Praxis wird nach Ablauf der zulässigen Einsatzdauer das komplette, meist aus Messingguß bestehende Zählergehäuse mit dem alten Meßeinsatz ausgetauscht und zum Herstellerwerk zurückgeschickt. Im Herstellerwerk wird der alte Meßeinsatz ausgebaut, das Metallgehäuse gereinigt, ein neuer Meßeinsatz eingesetzt, die komplette Einheit wird justiert und schließlich der Beglaubigungsstempel angebracht. Bei diesem Vorgehen wird also nicht nur der abgenutzte Meßeinsatz, sondern auch das schwere Metallgehäuse transportiert, was erhebliche Gewichts- und Transportkosten verursacht.

Erst wenn es gelingt, einen Meßeinsatz derart zu konstruieren, daß er genau genug mißt, möglichst in der metrologischen Klasse C, und für sich und ohne Metallgehäuse eichfähig ist, besteht die Möglichkeit, das metallische Zählergehäuse auf Dauer eingebaut zu lassen und nur noch den Meßeinsatz auszutauschen. Genau dies ist die Aufgabe der vorliegenden Erfindung.

Diese Aufgabe wird gelöst durch einen gattungsgemäßen Meßeinsatz mit den Merkmalen des Anspruchs 1.

Der erfindungsgemäße Wasserzähler besitzt als wesentliches Element einen Meßeinsatz mit einem Kunststoffgehäuse, einsetzbar in das eigentliche metallische Zählergehäuse. Das Kunststoffgehäuse, Kartusche genannt, enthält alle Komponenten, die für eine Eichung erforderlich sind. Dabei gewährleistet der Einsatz auch Funktionen der bisherigen Zählergehäuse, beispielsweise den druckdichten Verschluß nach außen, den freien Blick auf das Meßwerk usw.

Da die Kartusche und soweit möglich alle darin enthaltenen Komponenten aus Kunststoff bestehen, ist der Meßeinsatz erheblich leichter und kleiner als die metallischen Zählergehäuse. Lagerung und Transport sind vereinfacht. Die metallischen Zählergehäuse können in Zukunft beim Austauschen des Meßeinsatzes in der Rohrleitung verbleiben; etwaige Ablagerungen werden einfach ausgewischt.

Wasserzu- und -ablauf liegen koaxial zueinander im Boden des Kartuschengehäuses. Dadurch läßt sich der Meßeinsatz von oben in das Unterteil des Metallgehäuses einsetzen und mittels Kopfverschraubung befestigen, wobei die Abdichtung zwischen Wasserzulauf und -ablauf durch den axialen Druck auf einen O-Ring, eingelegt in eine Ringnabe im Boden des Kartuschenunterteils erfolgt. Axiale Toleranzen werden dabei dank der federnd nachgiebigen Eigenschaft des Bodens des Kartuschenunterteils ausgeglichen.

Das Kartuschengehäuse besteht wenigstens aus zwei Teilen, dem Kartuschenunterteil und dem Kartuschenoberteil. Beide sind durch eine zerstörungsfrei nicht zu lösende Verbindung miteinander verbunden. Dies kann beispielsweise eine Rastverbindung sein mit einer umlaufenden Rastnut und Rastfeder.

Vorteilhafterweise besitzen Kartuschenunterteil und Kartuschenoberteil einander entsprechende Zentriernocken und Zentriernuten. Dadurch wird die gegenseitig winkelrichtige Montage der beiden Kartuschenteile gewährleistet.

Im Zusammenhang mit weiteren Zentriernocken und Zentriernuten zwischen Kartuschenunterteil und Zählergehäuse wird der oftmals in dunklen Kellerräumen durchzuführende Austausch der Meßeinsätze ebenfalls beschleunigt.

Von wesentlicher Bedeutung für die Meßgenauigkeit ist die konstruktive Gestaltung von Flügelrad und Flügelbecher. Der Flügelbecher besteht im vorliegenden Fall aus einem Flügelbecher-Unterteil und einem getrennt davon hergestellten Flügelbecher-Oberteil, die mit Hilfe von Justierzapfen und entsprechenden Justierbohrungen in den einander zugekehrten Trennflächen winkelrichtig montiert werden. Bei korrekter Dimensionierung der Justierzapfen im Verhältnis zu den Justierbohrungen ist es möglich, Unterteil und Oberteil des Flügelbechers durch Verschweißen miteinander zu verbinden.

Die tangentialen Einströmkanäle sind ausschließlich in der Wand des Flügelbecher-Oberteils vorgesehen. Vorzugsweise handelt es sich um zweimal drei Einströmkanäle, die einander gegenüberliegend angeordnet sind. Zur Beeinflussung der Strömungscharakteristik sind hydraulische Einbauten in Form von radialen Staurippen, einer umlaufenden Staukante und Stauräumen in der Innenwand des Flügelbechers vorgesehen.

Zu den hydraulischen Einbauten ist auch die Schürze zu rechnen, die vor den Einströmkanälen mit einem gewissen Abstand zu diesen angeordnet ist, die Einströmkanäle teilweise überdeckt und eine etwa parabolisch gekrümmte Innenfläche besitzt.

Wasserzähler sind mit einem klappbaren Schutzdeckel ausgerüstet, der die transparente Oberseite vor Verschmutzungen und Beschädigungen schützt. Dieser klappbare Schutzdeckel ist bei der vorliegenden Erfindung direkt auf der Oberseite des Kartuschenoberteils angelenkt, und zwar vorzugsweise mittels eines Gelenkstiftes, der in eine Sackbohrung eingesetzt ist. Dank dieser Montageart ist der Schutzdeckel nicht ohne sichtbare Zerstörung zu lösen. Dies macht es wiederum möglich, Beglaubigungsstempel, Herstellerzeichen usw. direkt im Schutzdeckel anzubringen.

Ein weiterer Vorteil der vorliegenden Erfindung ist, daß das Zählergehäuse sehr einfach ausgeführt werden kann. Es besteht aus einem Unterteil mit einer koaxialen Anordnung von Wasserzufluß und -abfluß und einem Oberteil als Kopfverschraubung. Die Abdichtung gegen das Austreten von Wasser erfolgt durch lediglich drei O-Ringe, wobei einer für die Abdichtung zwischen Gehäuseunterteil und Gehäuseoberteil, einer für die Abdichtung zwischen Gehäuseunterteil und Kartusche und einer für die Abdichtung zwischen Kartusche und Kopfverschraubung verantwortlich ist.

Gemäß einer bevorzugten Ausgestaltung der Erfindung ist in das Unterteil des Zählergehäuses ein den Rückfluß verhinderndes Rückschlagventil einsetzbar, und zwar vorteilhafterweise direkt unter der Kartusche. So kann dieses Rückschlagventil bei der Montage der Meßkartusche eingesetzt und beim Auswechseln der Meßkartusche ebenfalls ausgewechselt werden.

Um nach Möglichkeit zu verhindern, daß im Wasser enthaltene Feststoffe sich ablagern, sind an mehreren Stellen Ringspalten vorgesehen, beispielsweise dort, wo beim Naßläufertyp die Flügelradwelle durch den Flügelbecher bzw. das Zählwerk durchtritt, oder dort, wo die Meßkartusche im Gehäuseunterteil aufgenommen wird. Diese Ringspalten sollen eine Wasserströmung nach Möglichkeit unterbinden, ohne den Druckausgleich zu behindern.

Da Ablagerungen aus dem Wasser jedoch niemals völlig unterbunden werden können, ist gemäß einer bevorzugten Ausgestaltung der Erfindung das Kartuschenunterteil zum Boden hin leicht konisch verjüngt. Dadurch verbleibt zwischen dem Gehäuse und der Meßkartusche ein konischer Spalt, der den Wasseraustausch und somit die Ablagerungen minimiert, so daß ein späterer Austausch bzw. Wechsel der Meßkartusche ohne Probleme möglich ist.

Es versteht sich, daß der Meßeinsatz nicht nur als Naßläufer, sondern auch als Trocken läufer ausgebildet sein kann. In diesem Fall ist der Flügelbecher oben mit einer druckfesten Metallplatte abgestützt, die übertragung der Drehzahl des Flügelrades auf das Zählwerk erfolgt in bekannter Weise mittels Magnetkupplung.

Diese und weitere Ausgestaltungen sind Gegenstand der Unteransprüche. Sie sollen anhand der nachfolgenden Beschreibung von Ausführungsbeispielen anhand der Zeichnung näher erläutert werden. Es zeigen
- Fig. 1: einen Längsschnitt durch eine komplette Naßläufer-Meßkartusche,
- Fig. 2: eine Draufsicht auf die Meßkartusche der Fig. 1,
- Fig. 3: einen Schnitt durch den Flügelbecher der Fig. 1 gemäß der Linie III-III,
- Fig. 4: einen Schnitt durch den Flügelbecher der Fig. 1 gemäß der Linie IV-IV,
- Fig. 5: einen Längsschnitt durch einen kompletten Zähler mit eingesetzter, teilweise aufgebrochen darstellter Meßkartusche nach Fig. 1 und
- Fig. 6: einen Längsschnitt durch einen kompletten Zähler mit eingesetzter, teilweise aufgebrochen dargestellter Meßkartusche vom Trokkenläufer-Typ.

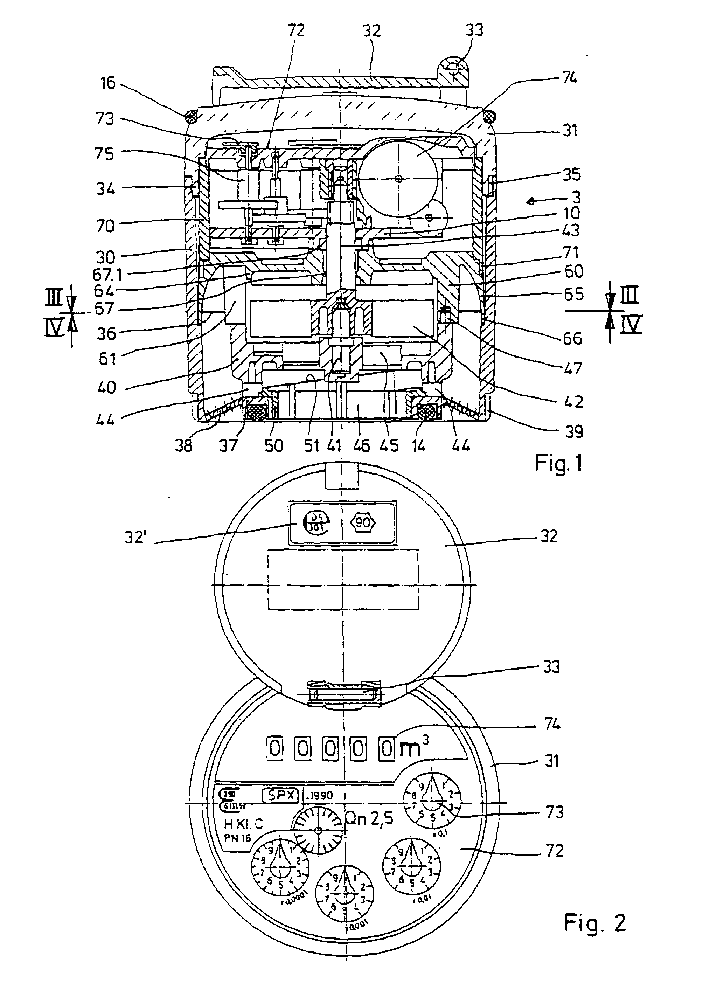

Fig. 1 zeigt einen Längsschnitt durch eine Meßkartusche 3 vom Naßläufer-Typ. Man erkennt ein becherförmiges, leicht konisches Kartuschenunterteil 30 und ein aus transparentem Kunststoffmaterial hergestelltes, druckfestes Kartuschenoberteil 31, die mittels einer umlaufenden Nut-Feder-Verbindung 34 unlösbar miteinander verrastet sind. Ein Justiernocken 35 in einer entsprechenden Nut stellt die korrekte Winkelposition von Kartuschenunterteil 30 und Kartuschenoberteil 31 sicher. Auf der Außenseite des Kartuschenoberteils 31 ist ein Schutzdeckel 32 mit Hilfe eines Gelenkstiftes 33 in einer Sackbohrung klappbar befestigt. Dank dieser unlösbaren Befestigung des Klappdeckels 32 ist es möglich, Herstellerzeichen, Beglaubigungsstempel 32' usw. an der Innenseite des Klappdeckels 32 anzubringen.

Unlösbare Befestigung bedeutet in diesem Zusammenhang, daß die Teile nicht ohne sichtbare Beschädigung voneinander getrennt werden können.

Das Kartuschenunterteil 30 besitzt einen Boden, dessen äußere Ringfläche 38 als Schmutzsieb ausgebildet ist. Die Sieböffnungen sind leicht konisch. Dadurch wird das Wasser beim Durchtritt beschleunigt; der daraus resultierende Druckabfall läßt etwaige Verunreinigungen ausfallen, bevor sie in das Innere der Meßkartusche 3 gelangen.

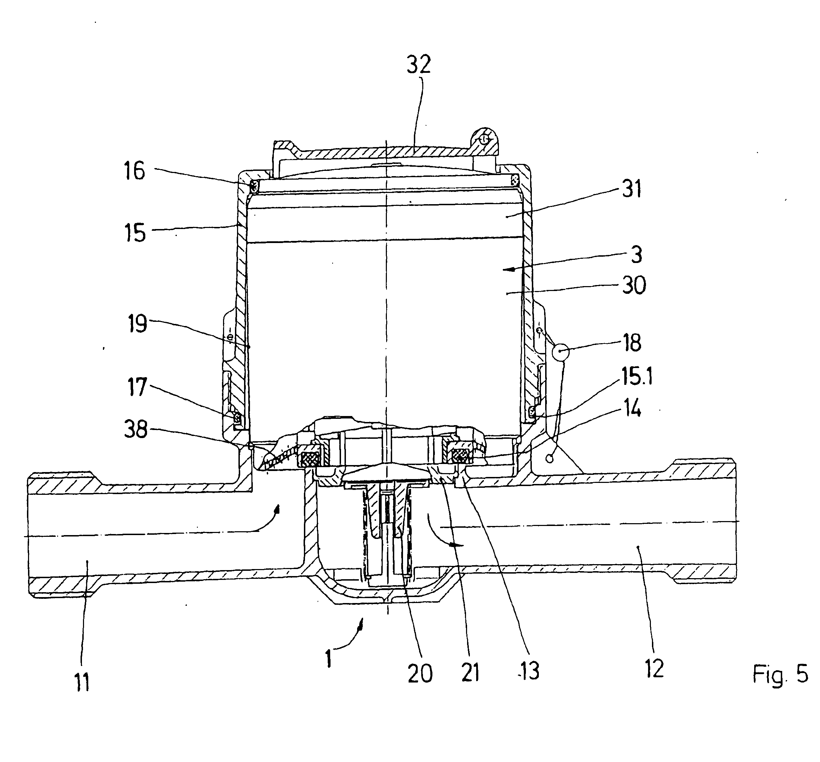

Im Anschluß an das Schmutzsieb 38 erkennt man einen Nabenring 37, in dessen Unterseite ein O-Ring 14 eingesetzt ist, der die Abdichtung zum Zählergehäuse 1 (Fig. 5) übernimmt.

Der untere Rand des Kartuschenunterteils 30 ist stufenartig verjüngt und mit Justiernocken 39 versehen, die die winkelgerechte Positionierung der Meßkartusche 3 im Zählergehäuse 1 sicherstellen.

Im Inneren der Meßkartusche 3 erkennt man unten einen Flügelbecher, bestehend aus Flügelbecherunterteil 40 und Flügelbecheroberteil 60, in dem in an sich bekannter Weise ein Flügelrad 42 auf einer Lagerspitze 41 leicht drehbar rotiert. Eine Flügelradwelle 43 ist durch das Flügelbecheroberteil 60 hindurchgeführt und treibt ein in einem Meßbecher 70 sitzendes Untersetzungsgetriebe 75 an. Zwischen Flügelradwelle 43 und Becheroberteil 60 bzw. Flügelradwelle 43 und Zählwerksunterplatine 10 sind Ringspalten 67 bzw. 67.1 gebildet, die labyrinthartig gegen Wasserströmungen abdichten, ohne das Eintreten des Wassers auch in den Meßbecher zu verhindern. Diese Maßnahme verhindert schädliche Ablagerungen im Zählwerk aus dem durchströmenden Wasser.

Der Meßbecher 70 wird im wesentlichen gebildet durch einen zylindrischen Kunststoffring, aufgesetzt auf das Flügelbecheroberteil 60 und oben abgedeckt durch ein Zifferblatt 72. Dort sind Zeiger 73 und Zahlenrollen 74 so angeordnet, daß sie durch das Kartuschenoberteil 31 hindurch leicht ablesbar sind.

Wie Fig. 1 ferner erkennen läßt, ist am Flügelbecheroberteil 60 außen umlaufend und mit Abstand von den tangentialen Einströmkanälen 61 eine Schürze 65 angeformt. Deren den Einströmkanälen 61 zugewandte Innenseite ist etwa parabelförmig gekrümmt. Dadurch wird die Umlenkung des zunächst senkrecht hochsteigenden Meßwassers in die Waagerechte günstig beeinflußt.

Wie die Zeichnung erkennen läßt, sitzt der untere Rand der Schürze 65 auf einer Stufe 36 an der Innenseite des Kartuschenunterteils 30 auf, wodurch der Flügelbecher 40, 60 korrekt positioniert wird.

Justiernocken 66 an der Unterseite der Schürze 65 stellen die korrekte Winkellage sicher.

Das Flügelbecherunterteil 40 besitzt unten zwei Bypaßöffnungen 44, mit denen die Anzeige insgesamt nach Minus oder Plus verschoben werden kann. Um die Menge des durch diese Bypaßöffnungen hindurchtretenden Wassers justieren zu können, ist in die zentrale Wasserauslaßöffnung im Boden des Kartuschenunterteils 30 ein Justierring 50 eingesetzt. Dessen Oberkante 51 ist zweifach rampenförmig ausgebildet und verschließt je nach Winkelstellung des Justierrings 50 einen mehr oder weniger großen Teil der Justieröffnungen 44.

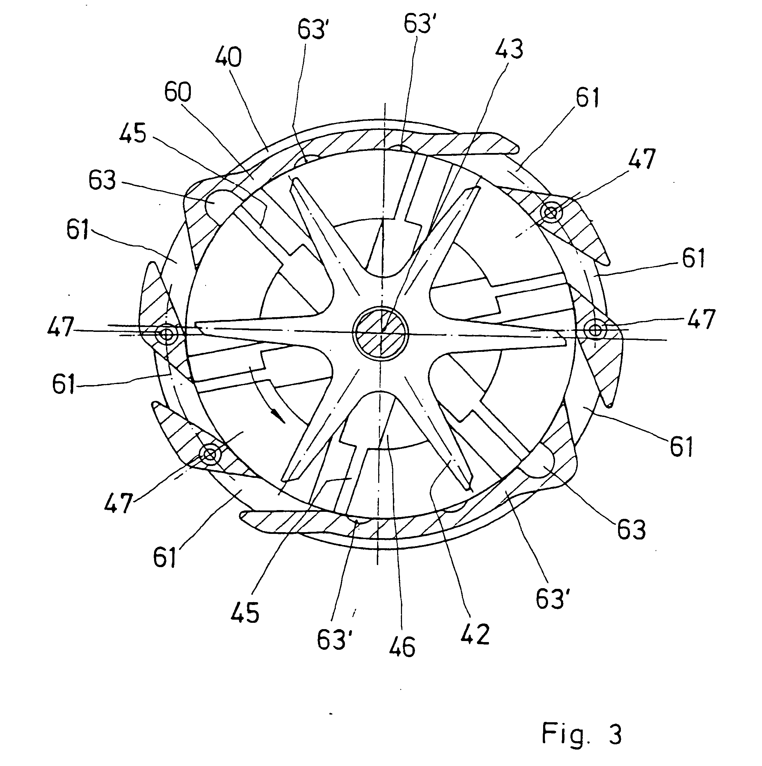

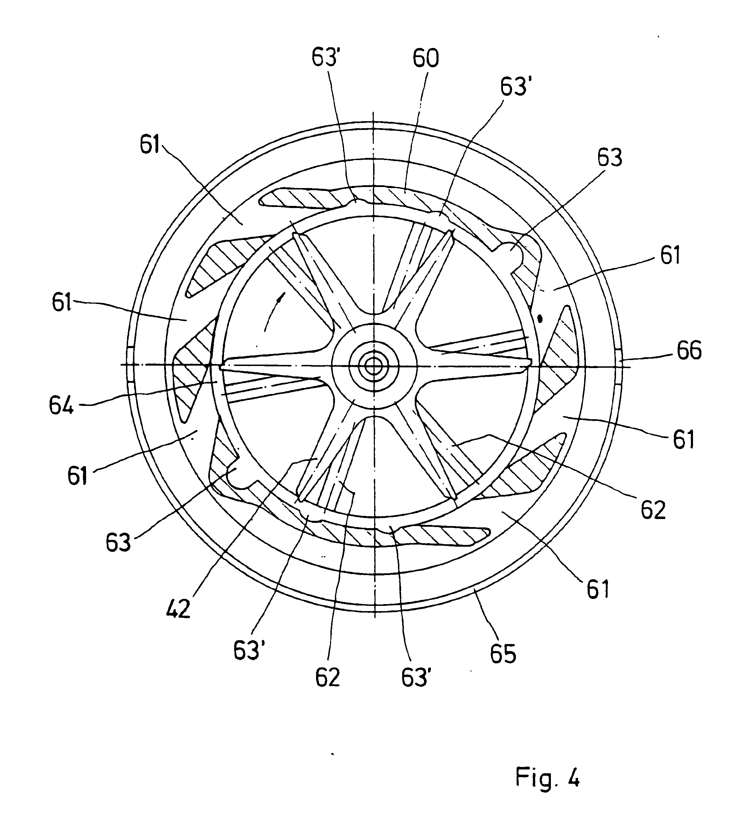

Da Bau und Konstruktion des Flügelbechers 40, 60 für die Genauigkeit der Meßanzeige entscheidend sind, sollen Flügelbecherunterteil 40 und -oberteil 60 anhand der Fig. 3 und 4 näher dargestellt werden.

Fig. 3 zeigt eine Draufsicht auf das Flügelbecherunterteil 40, wobei ein Teil des Flügelbecheroberteils 60 im Schnitt sichtbar ist. Man erkennt das Flügelrad 42 und dessen geschnittene Welle 43. Im Flügelbecherunterteil 40 erkennt man radiale Staurippen 45, die im Bereich der zentralen Wasserauslaßöffnung 46 schräg angestellt sind, um im Falle einer Wasserrückströmung ein Rückwärtslaufen des Flügelrades 42 zu bewirken. Die Staurippen 45 dienen dazu, die Wasserströmung so zu beeinflussen, daß die Meßgenauigkeit verbessert wird.

Fig. 3 zeigt auch Justierzapfen 47 am Flügelbecherunterteil 40, die in entsprechende Bohrungen im Flügelbecheroberteil 60 eingesetzt sind. Damit ist die winkelrichtige Montage des Flügelbechers 40, 60 gewährleistet.

Fig. 4 zeigt den Blick von unten in das Flügelbecheroberteil 60. Man erkennt auch an der Decke des Flügelbecheroberteils 60 radiale Staurippen 62 sowie eine umlaufende Staukante 64.

Am Umfang verteilt und einander genau gegenüberliegend sind zweimal je drei tangentiale Einströmkanäle 61 vorgesehen.

Außen am Flügelbecheroberteil 60 mit einem gewissen Abstand zu den Einströmkanälen 61 und diese teilweise überdeckend erkennt man die Schürze 65 mit Justiernocken 66.

Die Schürze 65 mit ihrer etwa parabelförmig gewölbten Innenseite, die Staukante 64, die Staurippen 62, 45 und die Stauräume 63 sind dafür verantwortlich, daß der dargestellte Zähler das Wasser mit der Genauigkeit der metrologischen Klasse C mißt.

Fig. 5 zeigt einen Längsschnitt durch das Zählergehäuse 1 mit montierter Meßkartusche 3 gemäß den Fig. 1 bis 4.

Das Zählergehäuse 1 besitzt einen Wasserzulaufstutzen 11 und einen Wasserablaufstutzen 12. Die Trennung zwischen Wasserzulauf und -ablauf erfolgt durch eine Ringfläche 13, auf der der O-Ring 14 in der Unterseite der Meßkartusche 3 aufsitzt.

Die Meßkartusche 3 ist im Inneren des Zählergehäuses 1 mit Hilfe der Kopfverschraubung 15 befestigt und mit O-Ringen 16 und 17 abgedichtet.

Eine Plombe 18 sichert gegen unbefugte Manipulationen.

Das Kartuschenunterteil 30 ist zum Boden 38 hin leicht konisch verjüngt. Dadurch verbleibt ein Spalt 19 zwischen Meßkartusche 3 und Zählergehäuse 1, in dem sich Schmutzteilchen aus dem Wasser ablagern können, ohne den Ausbau der Meßkartusche 3 zu behindern. Durch sogenannte Ringspalten zwischen Meßkartusche 3 und Zählergehäuse 1 bzw. Kopfverschraubung 15 wird im übrigen dafür gesorgt, daß möglichst kein Wasser durch diese Gehäusebereiche fließen kann.

Dank der Tatsache, daß der als Schmutzsieb ausgebildete Boden 38 des Kartuschenunterteils 30 federnd nachgiebig ausgebildet ist, werden Längentoleranzen zwischen Zählergehäuse 1 und Meßeinsatz 3 problemlos ausgeglichen.

Wie Fig. 5 weiterhin erkennen läßt, kann in das Zählergehäuse 1 direkt unter der Meßkartusche 3 ein den Wasserrückfluß verhinderndes Rückschlagventil 20 mit Ventilsitz 21 eingesetzt werden. Wird nach Ablauf der Eichgültigkeitsdauer die Meßkartusche 3 vor Ort ausgewechselt, wobei wie schon erwähnt nur die Kopfverschraubung 15 gelöst wird, während das Gehäuseunterteil 1 in die Leitung eingebaut bleibt, kann auch das Rückschlagventil 20, 21 bequem von oben ausgewechselt werden.

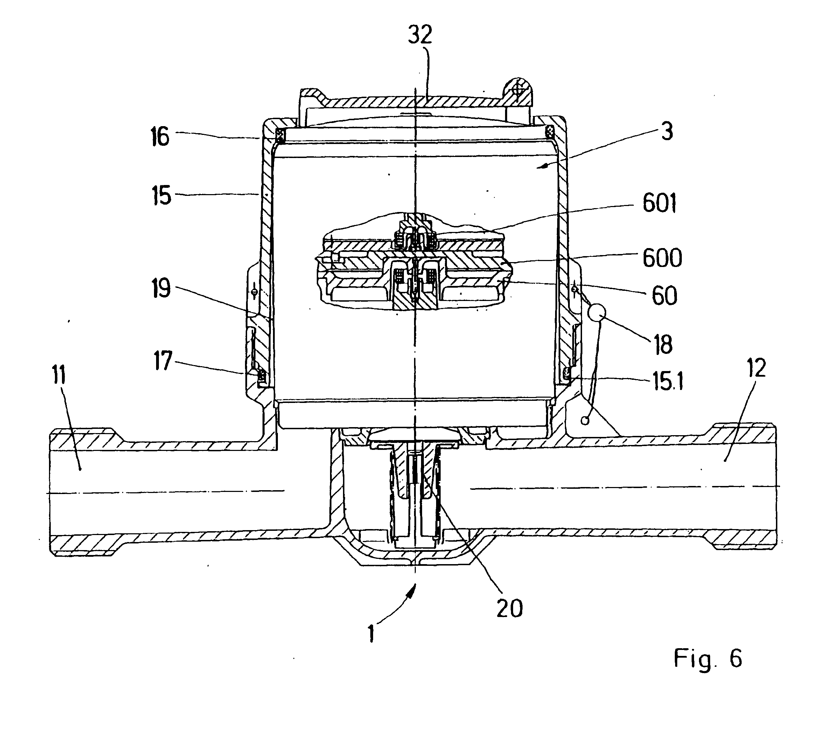

Fig. 6 zeigt einen Längsschnitt durch ein Zählergehäuse 1, in das eine Meßkartusche 3 vom Trockenläufertyp eingesetzt ist. Man erkennt eine druckfeste Metallplatte 600, die das Flügelbecheroberteil 60 nach oben druckfest abdeckt. Zur Übertragung der Drehzahl des Flügelrades auf das Meßwerk ist eine Magnetkupplung 601 vorgesehen. Im übrigen ist die Konstruktion des Zählergehäuses 1 und der überwiegend aus Kunststoff bestehenden Meßkartusche 3 identisch mit der Meßkartusche vom Naßläufer-Typ der Fig. 1 bis 5.

Sobald alle Teile in das Kartuschenunterteil 30 eingesetzt sind und das Kartuschenoberteil 31 auf das Unterteil 30 aufgeschnappt ist, liegt die gewünschte, für sich eichfähige und transportfähige Meßkartusche 3 vor, die den Beglaubigungsstempel 32' des Herstellerwerkes trägt. Die Monteure der Wasserversorgungsuntemehmen müssen nur noch diese im wesentlichen aus Kunststoff bestehende, leichte Meßkartusche 3 mit sich führen. Zum Auswechseln wird lediglich die Kopfverschraubung 15 gelöst, die alte Meßkartusche 3 entnommen, gegebenenfalls auch das Rückschlagventil 20, etwaige Ablagerungen im Zählergehäuse 1 ausgewischt, eine neue Meßkartusche 3 und gegebenenfalls ein neues Rückschlagventil 20 eingesetzt, die Koptverschraubung 15 auf Anschlag wieder aufgeschraubt und die Sicherungsplombe 18 angebracht. Die alte Meßkartusche muß nicht mehr in das Herstellerwerk zurück, sondern wird als Kunststoffschrott vorschriftsmäßig entsorgt.

## Patentansprüche

1. Mehrstrahl-Wasserzähler mit einem Zählergehäuse (1) mit Kopfverschraubung (15) und mit einer Meßkartusche (3), im wesentlichen bestehend aus Kunststoff,
- auswechselbar einsetzbar in das Zählergehäuse (1),
- umfassend einen zweiteiligen Flügelbecher (40, 60)
-- mit einem Flügelrad (42) mit senkrechter Welle (43),
-- mit mehreren tangential gerichteten Einströmkanälen (61),
-- mit einer bodenseitigen Ausströmöffnung (46),
-- mit hydraulisch aktiven Einbauten (45, 62, 63, 64)
-- und mit einer den Flügelbecher (40, 60) mit Abstand umgebenden, die Einströmkanäle (61) teilweise überdeckenden Schürze (65)
- und weiterhin umfassend einen Werkbecher (70)
-- mit Reduziergetriebe (75)
-- mit Zifferblatt (72)
-- und mit Zeigern (73) und Rollenzählwerk (74); und
- das Kartuschen-Oberteil (31) der Meßkartusche (3) ist als transparentes Schauglas ausgebildet,
- das Kartuschen-Unterteil (30) ist becherartig geformt,
-- der Boden des Kartuschen-Unterteils besitzt
--- eine als Schmutzsieb (38) ausgebildete Ringfläche für den Wasserzulauf,
--- eine zentrale Öffnung für den Wasserablauf (46),
--- dazwischen eine Ringnabe (37) zur Abstützung auf dem Zählergehäuse (1)
--- und ist federnd nachgiebig,
- Kartuschen-Oberteil (31) und Kartuschen-Unterteil (30) sind durch eine zerstörungsfrei nicht zu lösende Verbindung (34) miteinander verbunden,
- der Flügelbecher (40, 60) besteht aus einem Flügelbecher-Unterteil (40) und einem Flügelbecher-Oberteil (60),
-- das Fügelbecher-Unterteil (40) besitzt
--- bodenseitig radiale Staurippen (45)
--- eine zentrale Öffnung (46) für den Wasserablauf,
-- das Flügelbecher-Oberteil (60) besitzt
--- die tangentialen Einströmkanäle (61),
--- deckelseitig radiale Staurippen (62),
--- eine ringförmig umlaufende Staukante (64)
-- und wenigstens eine zum Flügelrad (42) hin offene Staukammer (63, 63'),
- eine Bypaß-Öffnung (44) zwischen Wasserzu- und -ablaufseite ist im Becher-Unterteil (40) angeordnet,
- der Werkbecher (70) besteht aus einem Zylinderabschnitt,
-- auf den Flügelbecher (40, 60) aufgesetzt
-- und oben durch das Zifferblatt (72) abgedeckt,
- das Kartuschen-Unterteil (30) besitzt innen eine Stufe (36), auf der sich die angeformte Schürze (65) abstützt.

2. Wasserzähler nach Anspruch 1, **gekennzeichnet durch** das Merkmal:
-- die Verbindung (34) zwischen Kartuschen-Unterteil (30) und Kartuschen-Oberteil (31) umfaßt eine umlaufende Rastnut und Rastfeder.

3. Wasserzähler nach Anspruch 1 oder 2, **gekennzeichnet durch** das Merkmal:
- das Kartuschen-Oberteil (31) besitzt einen Zentriernocken (35), das Kartuschen-Unterteil (30) eine entsprechende Zentriernut zur gegenseitig winkelrichtigen Montage.

4. Wasserzähler nach einem der Ansprüche 1 bis 3, **gekennzeichnet durch** die Merkmale:
- das Kartuschen-Oberteil (31) trägt auf seiner Oberseite einen klappbaren Schutzdeckel (32),
- der Schutzdeckel (32) ist mittels Gelenkstift (33), eingesetzt in eine Sackbohrung, angelenkt und zerstörungsfrei nicht zu lösen.

5. Wasserzähler nach einem der Ansprüche 1 bis 4, **gekennzeichnet durch** die Merkmale:
- in die zentrale bodenseitige Öffnung des Kartuschen-Unterteils (30) ist ein Justierring (50) eingesetzt,
- dessen Kante (51) ist rampenförmig abgeschrägt und verschließt die Bypaß-Öffnung (44) mehr oder weniger.

6. Wasserzähler nach einem der Ansprüche 1 bis 5, **gekennzeichnet durch** die Merkmale:
- die Kopfverschraubung (15) besitzt eine umlaufende Nut (15.1) zur Aufnahme eines zwischen der Kopfverschraubung (15) und dem Zählergehäuse (1) abdichtenden O-Rings (16).
- die Ringnabe (37) besitzt eine umlaufende Nut zur Aufnahme eines gegen das Zählergehäuse (1) abdichtenden O-Rings (14).
- das Zählergehäuse (1) besitzt einen ringförmigen Absatz zur Abdichtung zwischen Zählergehäuse (1) und Kopfverschraubung (15) mittels O-Ring (17).

7. Wasserzähler nach einem der Ansprüche 1 bis 6, **gekennzeichnet durch** das Merkmal:
- die Außenwand des Kartuschen-Unterteils (30) trägt Zentriernuten (39) zur winkelrichtigen Positionierung der Meßkartusche (3) im Zählergehäuse (1).

8. Wasserzähler nach einem der Ansprüche 1 bis 7, **gekennzeichnet durch** das Merkmal:
- das Kartuschen-Unterteil (30) ist zum Boden hin leicht konisch verjüngt.

9. Wasserzähler nach einem der Ansprüche 1 bis 8, **gekennzeichnet durch** das Merkmal:
- die den Einströmöffnungen (61) zugewandte Innenfläche der Schürze (65) ist etwa parabolisch gekrümmt.

10. Wasserzähler nach einem der Ansprüche 1 bis 9, **gekennzeichnet durch** das Merkmal:
- Flügelbecher-Unterteil (40) und Flügelbecher-Oberteil (60) besitzen in den einander zugekehrten Trennflächen Justierzapfen (47) und -bohrungen.

11. Wasserzähler nach einem der Ansprüche 1 bis 10, **gekennzeichnet durch** das Merkmal:
- in das Zählergehäuse (1) ist ein den Rückfluß verhinderndes Ventil (20, 21) zentral eingesetzt, vorzugsweise direkt unter der Meßkartusche (3).

12. Wasserzähler nach einem der Ansprüche 1 bis 11, **gekennzeichnet durch** das Merkmal:
- zwischen Meßraum und Zählwerkraum ist eine Labyrinthstopfbüchse angeordnet, die **durch** glatte Ringspalten (67) zwischen Flügelradwelle 43 und Flügelbecher-Oberteil 60 und Ringspalten 67.1 zwischen Flügelradwelle 43 und Zählwerkunterplatine (10) begrenzt ist.

13. Wasserzähler nach einem der Ansprüche 1 bis 12, **gekennzeichnet durch** das Merkmal:
- der Flügelbecher (40, 60) ist oberseitig mit einer druckfesten Platte (600) abgedichtet;
- eine Magnetkupplung (601) überträgt die Drehungen des Flügelrades (42) zum Reduziergetriebe (75).

## Claims

1. Multi-jet water meter with a meter housing (1) with a cap screw fitting (15) and with a measuring cartridge (3), which essentially consists of a plastics material
- and can be inserted in the meter housing (1) in a replaceable manner,
- comprising a two-part impeller compartment (40, 60)
-- with an impeller (42) with a vertical shaft (43),
-- with a plurality of inflow channels (61) directed at a tangent,
-- with an outflow opening (46) at the bottom,
-- with hydraulically active fittings (45, 62, 63, 64)
-- and with an apron (65) surrounding the impeller compartment (40, 60) at a spacing and partly covering the inflow channels (61),
- and also comprising a mechanism compartment (70)
-- with a reduction gear (75),
-- with a dial (72)
-- and with pointers (73) and a drum-type counter mechanism (74); and
- the upper cartridge part (31) of the measuring cartridge (3) is formed as transparent sight glass,
- the lower cartridge part (30) is formed like a cup,
-- the bottom of the lower cartridge part has
--- an annular surface formed as a dirt screen (38) for the water intake,
--- a central opening for the water outlet (46),
--- in between an annular hub (37) for support on the meter housing (1)
--- and is resiliently compliant,
- the upper cartridge part (31) and the lower cartridge part (30) are connected together by a connection (34) which cannot be undone in a non-destructive manner,
- the impeller compartment (40, 60) consists of a lower impeller compartment part (40) and an upper impeller compartment part (60),
-- the lower impeller compartment part (40) has
--- radial baffle ribs (45) at the bottom,
--- a central opening (46) for the water outlet,
-- the upper impeller compartment part (60) has
--- the tangential inflow channels (61),
--- radial baffle ribs (62) at the cover,
--- a baffle edge (64) circulating like a ring,
--- and at least one baffle chamber (63, 63') open towards the impeller (42),
- a bypass opening (44) between the water intake and the water outlet side is disposed in the lower compartment part (40),
- the mechanism compartment (70) consists of a cylindrical section,
-- is mounted on the impeller compartment (40, 60)
-- and covered at the top by the dial (72),
- the lower cartridge part (30) has a step (36) on the inside on which the moulded-on apron (65) is supported.

2. Water meter according to claim 1, **characterised by** the feature:
- the connection (34) between the lower cartridge part (30) and the upper cartridge part (31) comprises a circulating locking groove and locking tongue.

3. Water meter according to claim 1 or 2, **characterised by** the feature:
- the upper cartridge part (31) has a centring projection (35), the lower cartridge part (30) a corresponding centring groove for assembling the parts at the correct angle in relation to one another.

4. Water meter according to one of claims 1 to 3, **characterised by** the features:
- the upper cartridge part (31) bears a hinged protective cover (32) at its top side,
- the protective cover (32) is hinge-mounted by means of a hinge pin (33), which is inserted in a blind hole, and cannot be detached in a non-destructive manner.

5. Water meter according to one of claims 1 to 4, **characterised by** the features:
- an adjusting ring (50) is inserted in the central, bottom opening in the lower cartridge part (30),
- the edge (51) of which ring is bevelled like a ramp and more or less closes the bypass opening (44).

6. Water meter according to one of claims 1 to 5, **characterised by** the features:
- the cap screw fitting (15) has a circulating groove (15.1) for receiving an O-ring (16) providing a seal between the cap screw fitting (15) and the meter housing (1),
- the annular hub (37) has a circulating groove for receiving an O-ring (14) providing a seal with respect to the meter housing (1),
- the meter housing (1) has an annular shoulder for providing a seal between the meter housing (1) and the cap screw fitting (15) by means of an O-ring (17).

7. Water meter according to one of claims 1 to 6, **characterised by** the feature:
- the outer wall of the lower cartridge part (30) comprises centring grooves (39) for positioning the measuring cartridge (3) at the correct angle in the meter housing (1).

8. Water meter according to one of claims 1 to 7, **characterised by** the feature:
- the lower cartridge part (30) tapers slightly towards the bottom.

9. Water meter according to one of claims 1 to 8, **characterised by** the feature:
- the inner surface of the apron (65) which faces the inflow openings (61) is curved approximately like a parabola.

10. Water meter according to one of claims 1 to 9, **characterised by** the feature:
- the lower impeller compartment part (40) and the upper impeller compartment part (60) have adjusting pins (47) and holes in the parting planes which face one another.

11. Water meter according to one of claims 1 to 10, **characterised by** the feature:
- a valve (20, 21) which prevents backflow is inserted centrally in the meter housing (1), preferably directly below the measuring cartridge (3).

12. Water meter according to one of claims 1 to 11, **characterised by** the feature:
- a labyrinth gland is disposed between the measuring space and the counter mechanism space, this gland being bounded by smooth annular gaps (67) between the impeller shaft (43) and the upper impeller compartment part (60) and by annular gaps (67.1) between the impeller shaft (43) and the counter mechanism base board (10).

13. Water meter according to one of claims 1 to 12, **characterised by** the feature:
- the impeller compartment (40, 60) is sealed at the top side by a pressure-proof plate (600);
- a magnetic clutch (601) transmits the rotational movement of the impeller (42) to the reduction gear (75).

## Revendications

1. Compteur d'eau à jets multiples, comportant un boîtier de compteur (1) avec tête vissée (15) et une cartouche de mesure (3), essentiellement en matière plastique,
- pouvant être insérée de manière amovible dans le boîtier du compteur (1),
- comprenant un godet à pales (40, 60) en deux parties,
-- comportant une roue à aubes (42) avec un arbre vertical (43),
-- plusieurs canaux d'admission (61) tangentiels,
-- une ouverture de sortie (46) du côté du fond,
-- des éléments encastrés (45, 62, 63, 64) actifs par voie hydraulique
-- et un tablier (65) entourant à distance le godet à pales (40, 60) et recouvrant en partie les canaux d'admission (61)
- et en outre comprenant un godet de travail (70)
-- avec un engrenage démultiplicateur (75),
-- un cadran (72)
-- des aiguilles (73) et un compteur à rouleaux (74) ; et
- la partie supérieure (31) de la cartouche de mesure (3) étant conçue sous forme de verre-regard transparent,
- la partie inférieure (30) de la cartouche étant moulée en forme de godet,
-- le fond de la partie inférieure de la cartouche possédant
--- une surface annulaire conformée en tamis à impuretés (38) et destinée à l'arrivée d'eau,
--- une ouverture centrale pour l'écoulement d'eau (46),
--- entre les deux, un moyeu annulaire (37) pour le support sur le boîtier du compteur (1)
--- et étant flexible à la manière d'un ressort,
- la partie supérieure (31) de la cartouche et la partie inférieure (30) de la cartouche étant assemblées l'une avec l'autre par un assemblage (34) ne devant pas être desserré sans destruction,
- le godet à pales (40, 60) se composant d'une partie inférieure (40) du godet à pales et d'une partie supérieure (60) du godet à pales,
-- la partie inférieure (40) du godet à pales possédant
--- des nervures de retenue (45) radiales, du côté du fond,
--- une ouverture centrale (46) pour l'écoulement de l'eau,
-- la partie supérieure (60) du godet à pales possédant
--- les canaux d'admission (61) tangentiels,
--- des nervures de retenue (62) radiales, du côté du couvercle,
--- un bord de retenue (64) périphérique et annulaire
--- et au moins une chambre de retenue (63, 63') ouverte vers la roue à aubes (42),
- une ouverture de dérivation (44) entre le côté de l'arrivée d'eau et le côté de la sortie d'eau étant disposée dans la partie inférieure (40) du godet,
- le godet de travail (70) se composant d'une section cylindrique,
-- placée sur le godet à pales (40, 60)
-- et recouverte en haut par le cadran (72),
- la partie inférieure (30) de la cartouche possédant à l'intérieur un palier (36) sur lequel s'appuie le tablier (65) surmoulé.

2. Compteur d'eau selon la revendication 1, **caractérisé en ce que**
-- l'assemblage (34) entre la partie inférieure (30) de la cartouche et la partie supérieure (31) de la cartouche comprend une rainure périphérique d'encliquetage et une partie formant ressort à cran d'encliquetage.

3. Compteur d'eau selon la revendication 1 ou la revendication 2, **caractérisé en ce que**
- la partie supérieure (31) de la cartouche possède une came de centrage (35), et la partie inférieure (30) de la cartouche, une rainure correspondante de centrage pour le montage angulaire initial correct.

4. Compteur d'eau selon l'une quelconque des revendications 1 à 3, **caractérisé en ce que**
- la partie supérieure (31) de la cartouche porte sur sa face supérieure un couvercle (32) rabattable,
- le couvercle (32) est inséré dans un trou borgne à l'aide d'une cheville d'articulation (33), est articulé et ne peut pas être enlevé sans destruction.

5. Compteur d'eau selon l'une quelconque des revendications 1 à 4, **caractérisé en ce que**
- dans l'ouverture centrale du côté du fond de la partie inférieure (30) de la cartouche est inséré un anneau d'ajustage (50)
- dont le bord (51) est biseauté en forme de rampe et ferme plus ou moins l'ouverture de dérivation (44).

6. Compteur d'eau selon l'une quelconque des revendications 1 à 5, **caractérisé en ce que**
- l'assemblage vissé de la tête (15) possède une rainure périphérique (15.1) destinée à loger un joint torique (16) rendant étanche la partie entre l'assemblage par tête vissée (15) et le boîtier du compteur (1),
- le moyeu annulaire (37) possède une rainure périphérique destinée à loger un joint torique (14) rendant étanche la partie située contre le boîtier du compteur (1),
- le boîtier du compteur (1) possède un décrochement annulaire pour l'étanchéité entre le boîtier du compteur (1) et l'assemblage par tête vissée (15) à l'aide du joint torique (17).

7. Compteur d'eau selon l'une quelconque des revendications 1 à 6, **caractérisé en ce que**
- la paroi extérieure de la partie inférieure (30) de la cartouche porte des rainures de centrage (39) pour le positionnement angulaire correct de la cartouche de mesure (3) dans le boîtier du compteur (1).

8. Compteur d'eau selon l'une quelconque des revendications 1 à 7, **caractérisé en ce que**
- la partie inférieure (30) de la cartouche se rétrécit légèrement en forme de cône vers le fond.

9. Compteur d'eau selon l'une quelconque des revendications 1 à 8, **caractérisé en ce que**
- la surface intérieure tournée vers les ouvertures d'admission (61) du tablier (65) présente une courbure sensiblement parabolique.

10. Compteur d'eau selon l'une quelconque des revendications 1 à 9, **caractérisé en ce que**
- la partie inférieure (40) du godet à pales et la partie supérieure (60) du godet à pales possèdent des doigts d'ajustage (47) et des trous d'ajustage dans leurs surfaces de joint adjacentes l'une avec l'autre.

11. Compteur d'eau selon l'une quelconque des revendications 1 à 10, **caractérisé en ce que**
- dans le boîtier du compteur (1), une vanne (20, 21) empêchant le reflux est insérée en position centrale, de préférence directement sous la cartouche de mesure (3).

12. Compteur d'eau selon l'une quelconque des revendications 1 à 11, **caractérisé en ce que**
- entre l'espace de mesure et l'espace de comptage est disposé un presse-étoupe à labyrinthe qui est limité par des passages annulaires (67) lisses entre l'arbre (43) de la roue à aubes et la partie supérieure (60) du godet à pales ainsi que par des passages annulaires (67.1) entre l'arbre (43) de la roue à aubes et la platine inférieure du compteur (10).

13. Compteur d'eau selon l'une quelconque des revendications 1 à 12, **caractérisé en ce que**
- le godet à pales (40, 60) est rendu étanche du côté supérieur par une plaque (600) résistant à la pression ;
- un accouplement à aimant (601) transmet les rotations de la roue à aubes (42) vers l'engrenage démultiplicateur (75).
